# EUROPÄISCHE PATENTSCHRIFT

(11) **EP 1 977 566 B1**
(45) Veröffentlichungstag und Bekanntmachung des Hinweises auf die Patenterteilung: **15.03.2017**
(21) Anmeldenummer: 06752588.1
(22) Anmeldetag: 30.06.2006
(51) Int. Cl.: H04L 12/40, H04L 12/43, H04L 12/801, H04L 12/851

(54) **ZEITGESTEUERTE SICHERE KOMMUNIKATION**
TIME-CONTROLLED SECURE COMMUNICATION
COMMUNICATION SECURISEE SYNCHRONISEE

(30) Priorität: 27.01.2006 AT 1252006; 04.05.2006 AT 7612006
(43) Veröffentlichungstag der Anmeldung: 08.10.2008
(73) Patentinhaber: FTS Computertechnik GmbH, 1040 Wien (AT)
(72) Erfinder: KOPETZ, Hermann, A-2500 Baden bei Wien (AT); POLEDNA, Stefan, A-3400 Klosterneuburg (AT)
(74) Vertreter: Patentanwaltskanzlei Matschnig & Forsthuber OG
(86) Internationale Anmeldenummer: PCT/AT2006/000278
(87) Internationale Veröffentlichungsnummer: WO 2007/085028

(56) Entgegenhaltungen:
- EP-B1- 0 658 257
- WO-A-2005/099187

## Beschreibung

Die Erfindung betrifft ein Verfahren zur Übertragung von Nachrichten über ein *zeitgesteuertes Kommunikatikonssystem* (*ZK*) zwischen einer Anzahl von *IP-Cores,* wo jedes IP-core über ein informationsverarbeitendes Subsystem (IVS) und einen Netzwerkkontroller (NK) verfügt, wobei jeder NK über mindestens zwei Interfaces verfügt, ein Interface zu dem ZK und ein zweites Interface zu dem IVS. Ein derartiges Verfahren wird offenbart in WO2005/099187.

In einem Erfindungsgemäßen Verfahren, wie definiert im unabhängigen Anspruch 1, wird zwischen *privilegierten* und *nicht privilegierten* Nachrichten des ZK unterschieden und die das ZK betreffenden Sendeparameter eines Ports eines NK, wie der periodisch wiederkehrende Sendezeitpunkt einer zeitgesteuerten Nachricht und die maximale Sendedauer nach jedem Sendezeitpunkt, können ausschließlich von einer privilegierten Nachricht über das ZK oder direkt von einer privilegierten IP-Core gesetzt werden. Jeder NK, der eine Nachricht zu senden beabsichtigt, beginnt autonom exakt zum zeitlich nächsten gesetzten Sendezeitpunkt die Nachricht zu senden und bricht den Sendevorgang spätestens nach Ablauf der zugewiesenen maximalen Sendedauer ab.

Dabei ist in jedem NK konstruktiv, d.h. vorzugsweise über die Hardware, sicher gestellt ist, dass das ZK betreffenden Sendeparameter eines Ports eines NK ausschließlich von einer privilegierten Nachricht über das ZK oder direkt von einer privilegierten Instanz (privilegiertes IP-Core) gesetzt werden können.

Folgende konkrete und vorteilhafte Ausgestaltungen können bei dem erfindungsgemäßen Verfahren zusätzlich oder alternativ realisiert sein:
- die NKs sind auf einem einzigen System-on-Chip (SoC) realisiert und das ZK ist als Network-on-Chip ausgeführt ist;
- die NKs sind auf unterschiedlichen Chips realisiert und das ZK ist als off-chip-Network ausgeführt ist;
- die Unterscheidung zwischen einer privilegierten und einer nicht privilegierten Nachricht des ZK erfolgt auf der Basis eines designierten Bits im Header jeder ZK Nachricht;
- die Unterscheidung zwischen einer privilegierten und einer nicht privilegierten Nachricht des ZK erfolgt auf der Basis des periodischen Sendezeitpunkts der Nachricht;
- es wird zwischen *privilegierten* und *nicht privilegierten* Sendeports des NK eines IP-Cores unterschieden, und eine privilegierte Nachricht kann nur über einen privilegierten Sendeport gesendet werden, wobei die Unterscheidung zwischen einer privilegierten und einer nicht privilegierten Nachricht auf der Basis des physikalischen Namens des privilegierten Sendeports erfolgt.

Bei weiteren zusätzlichen oder alternativen Ausgestaltungen ist vorgesehen, dass
- jeder IP-Core über einen physikalischen Namen verfügt, der die physikalische Identität dieses IP-Cores benennt, und weiters über einen oder mehrere logische Namen verfügt, die die Funktionen der IP-Cores in der gegebenen Anwendung benennen, und wobei die Zuweisung eines logischen Namens zu einem IP-Core ausschließlich über eine privilegierte Nachricht erfolgen kann;
- das IVS eines nicht privilegierten IP-Cores die Sendeparameter ihres NK lesen, aber nicht verändern kann;
- eine der privilegierten IP-Cores, die sogenannte *trusted network authority* (TNA) einen Scheduler beinhaltet, der die Sendeparameter aller an das ZK angeschlossenen IP-Cores dynamisch so errechnet, dass jeder Sendevorgang konfliktfrei ablaufen kann, und wo die TNA mittels privilegierter Nachrichten über das ZK die periodischen Sendezeitpunkte und die Sendedauern allen Ports der NKs den IP-Cores zuweist;
- in einem sicherheitskritischen System der Scheduler aus der TNA ausgegliedert wird und in ein anderes IP-Core verlagert wird und wo die TNA die Überprüfung der vom Scheduler errechneten Sendeparameter vornimmt, ehe diese Sendeparameter mittels privilegierter Nachrichten von der TNA an die anderen IP-Cores übertragen werden;
- die Dauer der Perioden der zeitgesteuerten Nachrichten im ZK Zweierpotenzen einer kleinsten Periode sind;
- die Periode des ZK exakt der Dauer einer physikalischen Sekunde entspricht;
- über einen einzigen physikalischen Kommunikationskanal des ZK im Zeitmultiplexverfahren mehrere unabhängige Ports eines IP-Cores versorgt werden;
- die Berechnung der konfliktfreien Sendeparameter innerhalb eines zeitgesteuerten SoC von einer *off-chip Instanz* durchgeführt wird und dass die Ergebnisse dieser Berechnung über eine Datenverbindung an den betroffenen zeitgesteuerten SoC übermittelt werden;
- die Daten auf der Datenverbindung zwischen der *off-chip Instanz* und dem betroffenen SoC verschlüsselt übertragen werden;
- jede IP-Core eine Nachricht über das ZK an die privilegierte IP-Core, die den Scheduler beinhaltet, senden kann um eine Änderung der zugewiesenen Sendezeitpunkte und der zugewiesenen Sendedauern anzufordern;
- eine oder mehrere IP-Coren periodisch eine Lebenszeichen-Nachricht über das ZK an eine oder mehrere der privilegierten IP-Coren senden;
- ein privilegierter IP-Core bei Ausbleiben der Lebenszeichen-Nachricht über das ZK den Wiederanlauf der betroffenen nicht privilegierten IP-Core durch den NK dieser IP-Core veranlassen kann;
- eine der privilegierten IP-Coren bei Ausbleiben der Lebenszeichen-Nachricht von einer IP-Core eine Rekonfiguration des SoC vornimmt, indem dem NK einer anderen IP-Core über eine privilegierte Nachricht des ZK die Rolle der ausgefallenen IP-Core zugewiesen wird und falls erforderlich, ein *i-state,* der für die Erfüllung der neuen Rolle erforderlich ist, an die IP-Core übertragen wird;
- bei Erkennen eines Fehlers durch den NK der NK autonom eine Diagnosenachricht versendet;
- das informationsverarbeitende Subsystem (IVS) einer IP-Core entweder ein programmierbarer Rechner einschließlich der Anwendersoftware, eine FPGA Einheit oder eine dedizierte Hardware-Einheit ist;
- der physikalische Kommunikationskanal des ZK die Sendedaten in einem fehlerkorrigierenden Code umkodiert, so dass die vom fehlerkorrigierenden Code beherrschten Übertragungsfehler vom Empfänger erkannt und korrigiert werden können;
- über einen einzigen physikalischen Kommunikationskanal des ZK im Zeitmultiplexverfahren mehrere unabhängige Ports einer IP-Core versorgt werden;
- das ZK über zwei oder mehrere unabhängige physikalische Übertragungskanäle verfügt, so dass bei Ausfall eines Übertragungskanals ein oder mehrere weitere unabhängige Übertragungskanäle zur Verfügung stehen;
- der dynamische Scheduler die Schedules unter Berücksichtung des notwendigen Zeitverhaltens der IP-Coren und des optimalen Energieverbrauchs des gesamten SoC optimiert;
- die Taktfrequenz des ZK und die Arbeitsfrequenz jedes einzelnen IP-Cores unterschiedlich sind;
- die Arbeitsfrequenz eines IVS eines IP-Cores vom Scheduler über eine privilegierte Nachricht des ZK an das NK dieser IP-Core dynamisch verändert werden kann, um die Rechtzeitigkeit der Ergebnisse der IP-Core sicherzustellen und den Energieverbrauch des SoC zu optimieren;
- in einem designierten Bit im Header jeder ZK Nachricht vermerkt ist, ob die Nachricht eine periodische oder sporadische zeitgesteuerte Nachricht ist, und wo periodische Nachrichten in jeder zugewiesenen Periode gesendet werden und sporadische Nachrichten nur gesendet werden, wenn sich der Inhalt der Nachricht seit dem letzten Sendevorgang verändert hat;
- das informationsverarbeitende Subsystem (IVS) neben der Schnittstelle zum NK über eine weitere lokale Schnittstelle verfügt, über die eine Verbindung zu einem *off-chip Network* oder zu der *off-chip Prozessperipherie* realisiert ist;
- das informationsverarbeitende Subsystem (IVS) neben der Schnittstelle zum NK über eine weitere lokale Schnittstelle verfügt, die eine Verbindung zu einem anderen SoC entsprechend dem TT Ethernet Protokoll unterstützt;
- die globale Zeit des TT Ethernet Protokolls als Zeitreferenz für die externe Synchronisation des ZK herangezogen wird;
- die vom Scheduler entsprechend Anspruch 9 errechnete Schedule mit der Schedule des TT-Ethernet entsprechend Anspruch 30 derart abgestimmt ist, dass ein kontinuierlicher Datenstrom mit minimaler Latenz von einer IP-Core dieses SoC zu einer IP-Core eines anderen SoC fliessen kann;
- ein SOC mehrere Ports mit dem TT Ethernet Protokoll unterstützt, um den Ausfall eines Ports oder eines externen Netzwerkes zu tolerieren;
- mittels kryptographischer Verfahren sichergestellt wird, dass die Sendezeitpunkte in den NKs nur von dazu berechtigten IP-cores über verschlüsselte Nachrichten gesetzt oder verändert werden können.

### Weiters betrifft die Erfindung ein

System-On-Chip (SoC) zum Durchführen eines solchen Verfahrens, wie definiert im unabhängigen Anspruch 32.

Bei einem System-on-Chip (SoC), auf dem eine Vielzahl von IP Cores über ein zeitgesteuertes Kommunikationssystem verbunden sind, können das zeitgesteuerte Kommunikationssystem (ZK) und die IP Cores unterschiedlichen Clockdomains angehören und das Clock-domain-crossing ist jeweils innerhalb des einem IP Core zugeordneten Netzwerkkontrollers NK dadurch realisiert, dass ein informationsverarbeitendes Subsystem (IVS) des IP Cores innerhalb der a priori bekannten Stabilitätsintervalle zwischen der Nachrichtenübertragung durch das ZK auf die im NK vorhandenen Nachrichtenpuffer lesend oder schreibend zugreift.

Von Vorteil ist es, wenn über eine einzigen physikalische Kommunikationskanal des ZK im Zeitmultiplexverfahren mehrere unabhängige Ports eines IP-Cores versorgt werden.

Außerdem kann es zweckmäßig sein, wenn die Berechnung der konfliktfreien Sendeparameter innerhalb eines zeitgesteuerten SoC von einer *off-chip Instanz* durchgeführt wird und dass die Ergebnisse dieser Berechnung über eine Datenverbindung an den betroffenen zeitgesteuerten SoC übermittelt werden.

Die Daten auf der Datenverbindung zwischen der *off-chip Instanz* und dem betroffenen SoC können verschlüsselt übertragen werden.

Außerdem kann vorgesehen sein, dass jede IP-Coren eine Nachricht über das ZK an die privilegierte IP-Core, die den Scheduler beinhaltet, senden kann um eine Änderung der zugewiesenen Sendezeitpunkte und der zugewiesenen Sendedauern anzufordern.

Die technologischen Fortschritte auf dem Gebiet der Integration von Transistoren auf einem Chip haben dazu geführt, dass eine Anzahl von vollständigen Computern, die über ein on-chip Netzwerk Nachrichten austauschen, auf einem einzigen Chip realisiert werden kann.

Ein Beispiel für einen solchen Multi-Computer Chip ist der Cell Chip [9] auf dem neun Computer, jeder mit einem lokalen Speicher von 256 kByte, integriert sind. Es entspricht dem gegenwärtigen Stand der Technik, dass das on-chip Kommunikationsnetzwerk zwischen den on-chip Computern als ereignisgesteuertes Netzwerk ausgeführt ist. Da es in einem ereignisgesteuerten Netzwerk zu nicht planbaren Konflikten um die Zuweisung des on-chip Kommunikationskanals an die on-chip Computer kommen kann, sind ereignisgesteuerte Netzwerke im allgemeinen nicht deterministisch. Dieses Problem wird in der vorliegenden Erfindung dadurch gelöst, dass ein deterministisches zeitgesteuertes Kommunikationssystem als on-chip Netzwerk eingeführt wird.

Die vorliegende Erfindung hat zum Ziel durch die Einführung eines zeitgesteuerten on-chip Netzwerks die Kommunikation zwischen den on-chip Computern, die auf einem SoC realisiert sind, deterministisch zu gestalten. Um eine gute Ressourcenauslastung und die dynamische Anpassung des zeitgesteuerten on-chip Networks an sich dynamisch ändernde Anforderungen zu erreichen, wird erfindungsgemäß vorgeschlagen, einem ausgezeichneten on-chip Computer, der trusted network authority (TNA), die Funktion eines on-chip Schedulers zuzuweisen, der konfliktfreie Sendparameter dynamisch errechnet und sie den anderen on-chip Computern dynamisch durch die Übertragung privilegierter sicherer Nachrichten zuweist. Dieses dynamische Verfahren kann auch in einem zeitgesteuerten Kommunikationssystem, das eine Anzahl von Rechnerknoten verbindet, eingesetzt werden.

Das vorab beschriebene Ziel und andere neue Eigenschaften der vorliegenden Erfindung werden in den angeführten Abbildungen erläutert.
Fig.1 zeigt den inneren Aufbau einer informationsverarbeitenden Einheit, die im folgenden als IP-core bezeichnet wird.
Fig. 2. zeigt Aufbau eines System-on-chip (SoC), auf dem sechs on-chip IP-cores über ein zeitgesteuertes Netzwerk kommunizieren.
Fig. 3 zeigt den Aufbau einer Nachricht im zeitgesteuerten Kommunikationssystem.
Fig. 4 zeigt die Struktur des Zeitdarstellung im Netzwerk.
Fig. 5 zeigt den Aufbau eines Clusters mit sechs zeitgesteuerten SoCs, die über zwei unabhängige TT-Ethernet Netzwerke miteinander verbunden sind.

Im folgenden Abschnitt wird eine mögliche Realisierung eines zeitgesteuerten on-chip Netzwerks am Beispiel eines SoC mit sechs IP-Cores gezeigt.

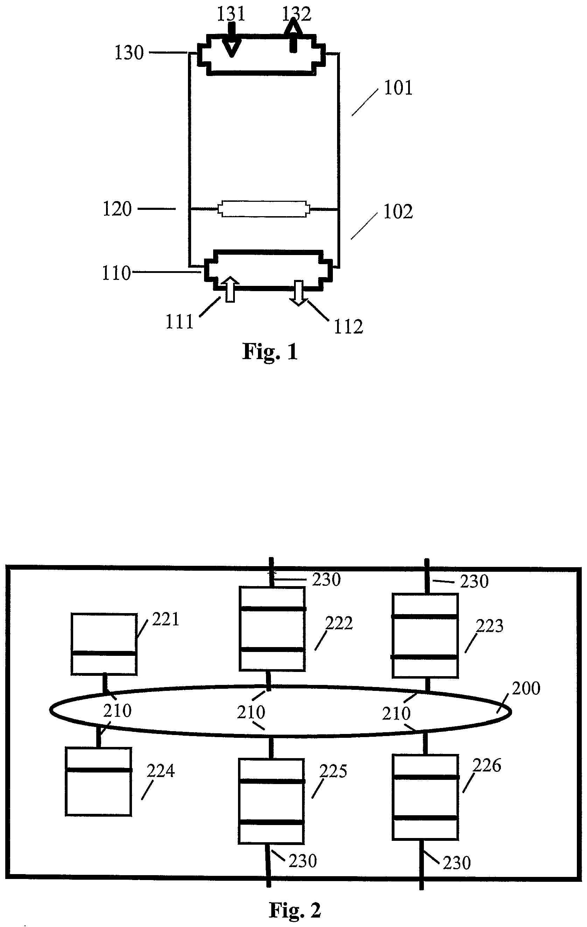

Fig. 1 zeigt den Aufbau einer on-chip IP-Cores. Eine solches IP-Core besteht aus einem informationsverarbeitenden Subsystem (IVS) 101 und einem on-chip-Netzwerkkontroller (NK) 102. Das IVS kann ein Mikrocomputer mit der notwendigen Systemsoftware und der notwendigen Anwendersoftware sein, oder ein FPGA Subsystem oder eine dediziertes Hardwaresubsystem (state-machine). Das IP-Core verfügt über zwei Schnittstellen, einer Schnittstelle zum NK 120 und einer optionalen zweiten Schnittstelle 130 zu einem externen off-chip Netzwerk oder zu einer externen Prozessperipherie. Die Schnittstelle 130 der Fig. 1 zeigt zwei Ports, den Eingangsport 131 über den Nachrichten sequentiell empfangen werden können und den Ausgangsport 132 über den Nachrichten sequentiell gesendet werden können. Der NK verfügt über zwei Schnittstellen, einer Schnittstelle 120 zum IVS und einer zweiten Schnittstelle 110 zum zeitgesteuerten Kommunikationssystem (ZK). In Fig. 1 sind zwei Ports zum ZK des NK 102 dargestellt, ein sequentieller Eingangsport 111 und ein sequentieller Ausgangsport 112. Erfindungsgemäß können auch mehr als zwei Ports eines NK 102 zum ZK 200 konfiguriert werden.

Fig. 2 zeigt den Aufbau eines zeitgesteuerten System-on-Chip (SoC) auf dem sechs IP-Cores 221, 222, 223, 224, 225 und 226 dargestellt sind, die über ein ZK 200 miteinander verbunden sind. Die IP-Cores sind wie auf Fig.1 dargestellt, aufgebaut. Jedes IP-Core unterstützt eine Verbindung 210 zum ZK. Vier der IP-Cores, 222, 223, 225 und 226 unterstützen eine weitere Verbindung 230 zu einem externen Netzwerk oder zur externen Prozessperipherie. Entsprechend den Prinzipien der Zeitsteuerung [9, S.171], [2,3,4,6] koordinieren die IP-Cores ihre Sendeoperationen am ZK 200 derart, dass es im ZK 200 nie zu einem Konflikt zwischen zwei gesendeten Nachrichten kommt. Diese Koordination erfolgt über eine gemeinsame globale Zeitbasis entsprechend dem time-division-multiple-access Verfahren. Dazu ist erforderlich, dass z.B. eines der IP-Cores, z.B. 226, die Funktion eines zentralen Masters der Uhrensynchronisation übernimmt [1,5], um die lokalen Uhren in allen NKs zu synchronisieren. Um die Konfliktfreiheit der Sendeoperationen zu gewährleisten, wird die Planung der Sendezeitpunkte und der Sendedauern in einem speziellen privilegierten IP-Core, z.B. in der IP-Core 226, zentral für den gesamten SoC durchgeführt. Wir bezeichnen eine solches IP-Core 226 als trusted-network authority (TNA). Es ist eine wesentliche Eigenschaft dieser Erfindung, dass die Übertragung dieser Sendezeitpunkte und Sendedauern von dem privilegierten IP-Core 226, der TNA, an die NKs der anderen IP-Cores nur über privilegierte Nachrichten erfolgen kann. Es ist einem nicht-privilegierten IP-Core daher unmöglich, den Sendezeitpunkt und die Sendedauer einer Nachricht des ihr zugeordneten NK zu ändern. Durch diese wesentliche Eigenschaft dieser Erfindung wird verhindert, dass ein Software- oder Hardwarefehler im informationsverarbeitenden Subsystem (IVS) 101 eines nicht privilegierten IP-Cores einen Einfluss auf den Sendezeitpunkt ihres NK 102 und damit indirekt auf die Datenkommunikation zwischen den anderen IP-Cores haben kann. Diese wichtige Eigenschaft der Erfindung verhindert somit die Möglichkeit der Fehlerfortpflanzung eines Fehlers eines IVS im Zeitbereich auf die anderen IP-Cores auf der Ebene der Architektur. Selbstverständlich ist es dem IVS 101 möglich, den aktuellen Wert des Sendezeitpunkts und der Sendedauer der ihrer NK 102 von dem privilegierten IP-Core 226 zugewiesen wurde, zu lesen (aber nicht möglich, diese Werte zu ändern).

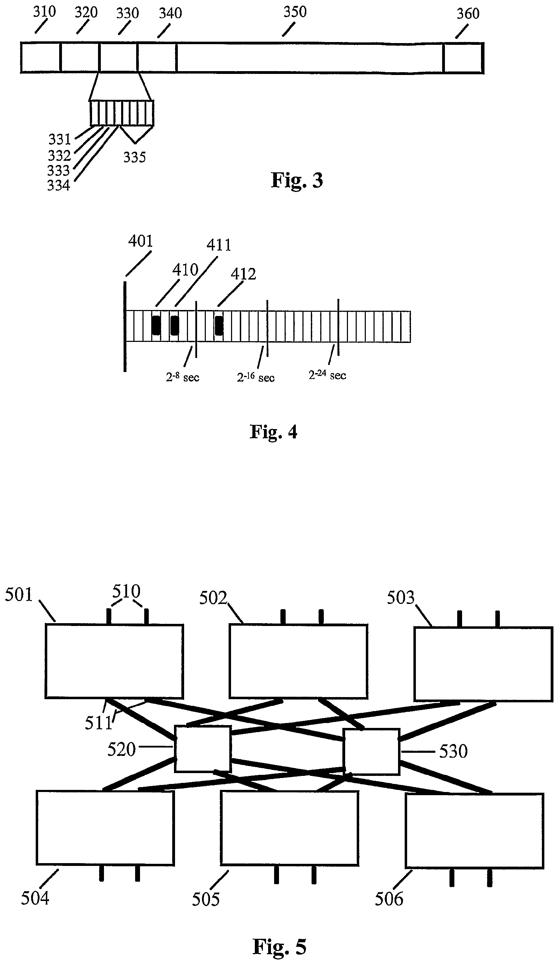

Fig. 3 zeigt einen möglichen Aufbau einer Nachricht des ZK. Jede ZK Nachricht beinhaltet eine Sendeadressenfeld 310 in dem der Name der sendenden IP-Cores eingetragen ist. Im Feld 320 wir die Adresse des Empfängers der Nachricht eingetragen. Wenn eine Nachricht an alle IP-Cores, die an das ZK angeschlossen sind, gesendet werden soll, so steht im Empfängerfeld eine spezielle Adresse, z.B., kein Bit von 320 ist gesetzt. Das Feld 330 ist ein Kontrollfeld der Nachricht. Wenn Bit 331 gesetzt ist, so ist die Nachricht eine privilegierte Nachricht, wenn Bit 331 nicht gesetzt ist, so ist die Nachricht eine nicht privilegierte Nachricht. Es muss hardwaretechnisch sichergestellt sein, dass nur ein privilegiertes IP-Core eine privilegierte Nachricht senden kann (d.h., Bit 331 setzen kann). Alternativ kann eine privilegierte Nachricht durch kryptographische Methoden derart verschlüsselt werden, dass nur der NK 102 die Nachricht entschlüsseln kann. Wenn Bit 332 des Kontrollfeldes 330 gesetzt ist, so ist die Nachrichtenadresse eine physikalische Adresse und kennzeichnet die physikalische Identität der sendenden IP-Core. Wenn Bit 332 nicht gesetzt ist, so handelt es sich um eine logische Adresse, die die Rolle des Senders und Empfängers aus der Sicht der Software kennzeichnet. Wenn Bit 333 gesetzt ist, so handelt es sich um eine periodische zeitgesteuerte Nachricht, die in jeder Periode übertragen wird. Wenn Bit 333 nicht gesetzt ist, so handelt es sich um eine sporadische zeitgesteuerte Nachricht, die nur gesendet wird, wenn sich der Nachrichteninhalt seit dem letzten Sendevorgang geändert hat. Bit 334 hat (noch) keine Bedeutung. Die vier Bits 335 informieren über die Länge einer Nachricht, ausgedrückt in einem Vielfachen der kleinsten Nachrichtenlänge. Im Feld 340 ist der Name der Nachricht enthalten. Der Nachrichtenname stellt die Verbindung zwischen dem Inhalt der Nachricht in Feld 350 und der syntaktischen Struktur und der Bedeutung dieses Inhalts her. Schließlich ist das optionale Feld 360 ein CRC Feld zum Erkennen von Übertragungsfehlern. Der Nachrichteninhalt kann auch in einen fehlererkennenden Code umkodiert werden, damit Übertragungsfehler, die von diesem Code beherrscht werden, nicht nur erkannt, sondern auch sofort korrigiert werden können.

Erfindungsgemäß können die in Fig. 3 angeführten Attribute einer Nachricht auch in einer Nachrichten-Attribut-Tabelle (NAT) beim Sender und Empfänger gespeichert werden, wobei der periodisch wiederkehrende Sendezeitpunkt der Nachricht die zugehörige NAT eindeutig identifiziert. Eine solche Implementierung spart Overhead in der Datenkommunikation. Die Informationen in den NATs können durch fehlerkorrigierende Codes geschützt werden, um transiente Fehler im Speicher tolerieren zu können.

Fig. 4 zeigt das einheitliche Zeitformat, das im ZK 200 und in den NKs 102 verwendet wird. Die Basis für dieses einheitliche Zeitformat ist eine gewählte Zeiteinheit 401. Dieses Format basiert auf einer binären Unterteilung der gewählten Zeiteinheit 401. Bei einer Einschränkung der Periodenwahl auf negative Zweierpotenzen der Zeiteinheit (1/2, ¼,1/8, ...) ist des möglich, die Periodendauer durch ein einziges Bit, dem Periodenbit 410, in diesem binären Zeitformat zu spezifizieren. Die Phase einer Periode, d.h. die Abweichung des Beginns der Periode vom Periodenanfang, kann durch die Bitfolge 411 und 412 rechts vom Periodenbit 410 festgelegt werden. Wenn als Zeiteinheit 401 die physikalische Sekunde gewählt wird, dann sind die möglichen Perioden 1/2, ¼, 1/8, ... Sekunden.

Fig. 5 zeigt ein Cluster mit sechs SoCs 501, 502, 503, 504, 505 und 506. Jeder dieser SoCs unterstützt zwei Verbindungen 511 zu zwei unabhängigen zeitgesteuerten off-chip Netzwerken 520 und 530. Zusätzlich unterstützt jeder SoC zwei Verbindungen 510 zu lokalen Netzwerken oder zur lokalen Prozessperipherie. Die off-chip Netzwerke 520 und 530 kön nen z.B. durch das TT Ethernetprotokoll [7] gesteuert werden. Es besteht dann die Möglichkeit, dass die Zeitbasis des TT Ethernetprotokolls als externe Zeitreferenz für die SoCs 501, 502, 503, 504, 505 und 506 verwendet wird, so dass die internen Sendezeitpunkte aller IP-Cores innerhalb eines SoCs auch untereinander synchron sind. Es ist dann möglich eine Folge von Nachrichten von einem IP-Core eines SoCs, z.B. 501, zu einem IP-Core eines anderen SoCs, z.B. 505, mit minimaler Latenz und minimalen Jitter zu senden. Die Planung einer solchen SoC übergreifenden Echtzeit-Transaktion kann von einer festgelegten off-chip Instanz, z.B., dem SoC 506, für alle IP-Cores aller SoCs 501, 502, 503, 504, 505 und 506 des Clusters erfolgen. Es ist auch möglich, dass die Planung einer solcher Echtzeittransaktion von einer Instanz außerhalb des in Fig. 5 dargestellten Clusters erfolgt. Erfindungsgemäß müssen die Daten an die NKs 102, die die Sendezeitpunke der NKs in den SoC festlegen, verschlüsselt übertragen werden. Die in Fig. 5 dargestellten beiden externen Netzwerke 520 und 530 realisieren ein fehlertolerantes externes Kommunikationssystem. Ein solches fehlertolerantes externes zeitgesteuertes Kommunikationssystem auf der Basis ETHERNET ist in [7] offengelegt worden.

Nach dem Power-up eines SoCs werden von der TNA 226 eines SoCs die Sendeparameter (Sendezeitpunkt und Sendedauer) der Ports der SoCs berechnet und mittels privilegierte on-chip Nachrichten (Fig. 3) über das ZK 200 an die NKs 102 der IP-Cores des SoC übertragen.

Erfindungsgemäß muß konstruktiv sichergestellt werden, dass weder eine nichtprivilegierte Nachricht noch das IVS 101 einer IP-Core diese Sendedaten verändern kann. Ein Lesen dieser Sendedaten durch das IVS ist jedoch möglich. Jeder NK 102, der eine Nachricht zu senden beabsichtigt, beginnt autonom exakt zum zeitlich nächsten gesetzten Sendezeitpunkt die Nachricht zu senden und bricht den Sendevorgang spätestens nach Ablauf der zugewiesenen maximalen Sendedauer ab. Die Unterscheidung zwischen einer privilegierten und einer nicht privilegierten Nachricht des ZK erfolgt auf der Basis des Bits 331 im Kontrollfeld jeder ZK Nachricht. Alternativ kann diese Unterscheidung zwischen einer privilegierten und einer nicht privilegierten Nachricht auch auf der Basis des physikalischen Namens des privilegierten Sendeports einer IP-Core erfolgen. Es besteht auch die Möglichkeit diese Unterscheidung zwischen einer privilegierten und einer nicht privilegierten Nachricht auf der Basis des periodischen Sendezeitpunkts des privilegierten Sendeports eines IP-Cores vorzunehmen.

Jede IP-Core verfügt neben dem physikalischen Namen auch über einen logischen Namen. Der physikalische Namen benennt die physikalische Identität der IP-Core, während der logische Name die Funktion (Rolle) des IP-Cores in der gegebenen Anwendung benennt. Die Zuweisung eines logischen Namens zu einem IP-Core erfolgt auch ausschließlich über privilegierte Nachrichten des ZK.

Die Perioden der zeitgesteuerten Nachrichten im ZK sind Zweierpotenzen einer kleinsten Periode, wie in Fig. 3 dargestellt. Die kleinste Periode kann so gewählt werden, dass eine Zweierpotenz exakt der Dauer einer physikalischen Sekunde entspricht. Jede NK 102 kann eine Vielzahl von Eingabe und Ausgabe Ports zum ZK besitzen. Jedem Port wird von der TNA 226 eine eindeutige Periode mit einer eindeutigen Phase zugewiesen, wobei durch die TNA sichergestellt ist, dass es zu keinem Zeitpunkt einen Konflikt zwischen den verschiedenen Sendern des ZKs geben kann. Wenn ein IP-Core mehr Sendebandbreite benötigt, so kann sie eine Nachricht an die TNA senden, um die zusätzliche Bandbreite anzufordern. Die TNA wird dann überprüfen, ob dieser Anforderung entsprochen werden kann und im positiven Fall über eine privilegierte Nachricht die angeforderte Bandbreite (Periode, Phase und maximale Sendedauer) zuweisen. Jedes IVS 101 eines IP-Cores kann periodisch über ihr NK 102 eine Lebenszeichen Nachricht an die TNA 226 senden. Wenn diese Lebenszeichennachricht ausbleibt, so kann die TNA mittels einer privilegierten Nachricht an die NK 102 dieses IP-Cores den Wiederanlauf des IVS 101 veranlassen oder eine Rekonfiguration der Software des IVS einleiten. Im Rahmen einer Rekonfiguration wird von der TNA einem anderen physikalischen IP-Core des SoC der logische Name des ausgefallenen IP-Cores zugewiesen und, falls erforderlich, der notwendige i-state [8, S. 76] des IP-Core geladen.

Der i-state ist eine statische Datenstruktur, die die gesamte Software und die Initialisierungsdaten einers programmierbaren IP-Cores umfasst.

Die TNA 226 kann eine integrierte Ressourcenplanung des gesamten SoC vornehmen. In diesem Fall wird neben der Bandbreitenzuteilung des ZK auch die Rechtzeitigkeit und der Energieverbrauch der IP-Cores berücksichtigt. Erfindungsgemäß kann die TNA über eine privilegierte Nachricht an die NK 102 die Verarbeitungsfrequenz und/oder die Spannung des IVS beeinflussen, um den Energieverbrauch einer IP-Core zu optimieren. Der verteilte Charakter der vorgestellten SoC Architektur ermöglicht es, dass jedes IVS eine eigene Verarbeitungsfrequenz fährt, unabhängig von der Verarbeitungsfrequenz der anderen IVSes oder der Frequenz des ZK.

Wir bezeichnen ein Subsystem, das über eine einheitliche Zeitbasis verfügt als clock domain. Da das ZK und das IVS unterschiedlichen clock domains angehören, wird im NK ein clock domain crossing realisiert. Zwischen den a priori bekannten Sende und Empfangszeitpunkten der Nachrichten des ZK sind die im Nachrichtenpuffer des NK gespeicherten Nachrichten stabil und können vom IVS mit der aktuellen Frequenz des IVS gelesen bzw. beschrieben werden. Das clock-domain crossing wird somit innerhalb des NK durchgeführt.

In einer sicherheitskritischen Anwendung ist es sinnvoll, die integrierte Ressourcenplanung auf zwei IP-Cores aufzuteilen. Ein nicht privilegiertes IP-Core führt die Berechnung der integrierten Ressourcenplanung durch und sendet das Ergebnis dieser integrierten Ressourcenplanung an die TNA. Die TNA 226 überprüft, ob die errechnete Ressourcenplanung den gegebenen Sicherheitsanforderungen entspricht und sendet die überprüften Ergebnisse mittels privilegierter Nachrichten an die NKs 102 der IP-Cores. Da die Überprüfung, ob ein Szenario gegebene Sicherheitsanforderungen erfüllt, einfacher ist als die Berechnung eines solchen Szenarios, kann durch diese Trennung die Komplexität der sicherheitskritischen Software in der TNA 226 wesentlich herabgesetzt werden. Dadurch ergeben sich signifikante Einsparungen bei der Zertifizierung der Software von sicherheitskritischen Systemen.

Erfindungsgemäß kann der Energieverbrauch des ZK minimiert werden, in dem in den von der TNA zugewiesenen Perioden von der NK 102 nur Nachrichten gesendet werden, wenn das zugeordnete IVS 101 eine neue Nachricht produziert hat. Wenn also keine neue Nachricht vom IVS 101 bereitgestellt wurde, sendet die NK keine Nachricht.

Gegebenenfalls kann es erforderlich sein, die Datenübertragung innerhalb des ZK durch feed-forward error correction fehlertolerant zu gestalten. Zu diesem Zeck müssen die Daten einer ZK Nachricht (Fig. 3) in einen fehlerkorrigierenden Code umkodiert werden. Alternativ können innerhalb des ZK mehrere unabhängige Kommunikationsnetzwerke realisiert werden, so dass bei Ausfall eines Netzwerks ein oder mehrere andere Netwerke zur Verfügung stehen.

Der wirtschaftliche Nutzen ergibt sich aus folgenden Eigenschaften dieser Erfindung:
- Das deterministische on-chip Netzwerks garantiert, dass die Kommunikation zwischen den IP-Coren des SoC im Zeitbereich planbar wird. Dies ist eine notwendige Voraussetzung für die Zertifizierung von sicherheitskritischer Software und für die Realisierung der Composability der auf den IP-Cores implementierten Subsysteme.
- In einer sicherheitskritischen Anwendung kann durch die Trennung der sicherheitskritischen Software in der TNA 226 von der nicht sicherheitskritischen Software zur integrierten Ressourcenberechnung in einem nicht privilegierten IP-Core die Komplexität der sicherheitskritischen Software wesentlich herabgesetzt werden. Dadurch ergeben sich signifikante Einsparungen bei der Zertifizierung der Software von sicherheitskritischen Systemen
- Der Determinismus des on-chip Netzwerks ist eine notwendige Voraussetzung für die Realisierung von fehlertoleranten Systemen mittels TMR (triple modular redundancy).
- Die Erfindung unterstützt die weitgehende Entkopplung der Subsysteme eines SoC und führt damit zu einer signifikanten Reduktion der Komplexität.
- Da Erfindung ermöglicht es, die Folgen von Softwarefehler eines IVS zu minimieren, da eine fehlerhafte Software eines IVS die Funktion von anderen unabhängigen IP-Coren des SoC nicht beeinflussen kann.

### Zitierte Literatur:

[1] US 5694542 issued on Dec. 12,1989: A loosely coupled distributed computer system with node synchronization for precision in real time.
[2] EP 0 658 257 vom 18.12.1996: Kommunikationskontrolleinheit und Verfahren zur Übermittlung von Nachrichten.
[3] US 5887143 issues on March 23,1999: Time-Triggered Communcation Control Unit and Communication.
[4] AT 407 582 vom 15.6.2000: Nachrichtenverteilereinheit mit integriertem Guardian zur Verhinderung von Babbling Idiot Fehlern.
[5] AT 408 383 vom 15.6.2005: Verfahren und Apparat zur Kalibrierung des Uhrengangs in einem verteilten Echtzeitcomputersystem.
[6] EP 1325414 vom 21.04.2004 Behandlung von Fehlern in einem fehlertoleranten verteilten Computersystem.
[7] EP 1512254 B1 vom 6.10.2005, Kommunikationssystem und Verfahren zur Übertragung von zeitgesteuerten und ereignisgesteuerten Ethernet Nachrichten.
[8] Kopetz, H. (1997). Real-Time Systems, Design Principles for Distributed Embedded Applications; ISBN: 0-7923-9894-7. Boston. Kluwer Academic Publishers.
[9] Takahashi, O. et. al., Power conscious design of the Cell's processors synergistic processor element, IEEE Micro, Vol. 25, No. 5, Sept.-Oct. 2005, pp. 10-18

## Patentansprüche

1. Verfahren zur Übertragung von Nachrichten über ein *zeit-gesteuertes Kommunikatikonssystem (ZK)* (200) zwischen einer Anzahl von *IP-Cores* (221 - 226), wobei jedes IP-core (221 - 226) über ein informationsverarbeitendes Subsystem (IVS) (101) und einen Netzwerkkontroller (NK) (102) verfügt, wobei jeder Netzwerkkontroller (102) über mindestens zwei Interfaces (110, 120) verfügt, ein Interface (110) zu dem Kommunikationssystem und ein zweites Interface (120) zu dem informationsverarbeitenden Subsystem, **dadurch gekennzeichnet, dass** zwischen *privilegierten* und *nicht privilegierten* Nachrichten des Kommunikationssystems unterschieden wird und wobei die das Kommunikationssystem (200) betreffenden Sendeparameter eines Ports eines Netzwerkkontroller (102), wie der periodisch wiederkehrende Sendezeitpunkt einer zeitgesteuerten Nachricht und die maximale Sendedauer nach jedem Sendezeitpunkt, ausschließlich von einer privilegierten Nachricht über das Kommunikationssystem (200) oder direkt von einer privilegierten IP-Core (226) gesetzt werden, und wobei jeder Netzwerkkontroller (102), der eine Nachricht zu senden beabsichtigt, autonom exakt zum zeitlich nächsten gesetzten Sendezeitpunkt die Nachricht zu senden beginnt und den Sendevorgang spätestens nach Ablauf der zugewiesenen maximalen Sendedauer abbricht.

2. Verfahren nach Anspruch **1, dadurch gekennzeichnet, dass** die Netzwerkkontroller (102) auf einem einzigen System-on-Chip (SoC) realisiert sind und das Kommunikationssystem (200) als Network-on-Chip ausgeführt ist.

3. Verfahren nach Anspruch 1, **dadurch gekennzeichnet, dass** die Netzwerkkontroller auf unterschiedlichen Chips realisiert sind und das Kommunikationssystem als off-chip-Network ausgeführt ist.

4. Verfahren nach einem der Ansprüche 1 bis 3, **dadurch gekennzeichnet, dass** die Unterscheidung zwischen einer privilegierten und einer nicht privilegierten Nachricht des Kommunikationssystems (200) auf der Basis eines designierten Bits (331) im Header jeder Kommunikationssystem Nachricht erfolgt.

5. Verfahren nach einem der Ansprüche 1 bis 4, **dadurch gekennzeichnet, dass** zwischen *privilegierten* und *nicht privilegierten* Sendeports des Netzwerkkontrollers eines IP-Cores unterschieden wird, und eine privilegierte Nachricht nur über einen privilegierten Sendeport gesendet werden kann, wobei die Unterscheidung zwischen einer privilegierten und einer nicht privilegierten Nachricht auf der Basis des physikalischen Namens des privilegierten Sendeports erfolgt.

6. Verfahren nach einem der Ansprüche 1 bis 5, **dadurch gekennzeichnet, dass** jeder IP-Core über einen physikalischen Namen verfügt, der die physikalische Identität dieses IP-Cores benennt, und weiters über einen oder mehrere logische Namen verfügt, die die Funktionen der IP-Cores in der gegebenen Anwendung benennen, und wobei die Zuweisung eines logischen Namens zu einem IP-Core ausschließlich über eine privilegierte Nachricht erfolgen kann.

7. Verfahren nach einem der Ansprüche 1 bis 6, **dadurch gekennzeichnet, dass** das informationsverarbeitende Subsystem (101) eines nicht privilegierten IP-Cores (221 - 225) die Sendeparameter ihres Netzwerkkontroller (102) lesen aber nicht verändern kann.

8. Verfahren nach einem der Ansprüche 1 bis 7, **dadurch gekennzeichnet, dass** eine der privilegierten IP-Cores (226), die sogenannte *trusted network authority* (TNA) einen Scheduler beinhaltet, der die Sendeparameter aller an das Kommunikationssystem (200) angeschlossenen IP-Cores (221 - 226) dynamisch so errechnet, dass jeder Sendevorgang konfliktfrei ablaufen kann, und wobei die *trusted network authority* (226) mittels privilegierter Nachrichten über das Kommunikationssystem (200) die periodischen Sendezeitpunkte und die Sendedauern allen Ports der Netzwerkkontroller (102) den IP-Cores (221 - 226) zuweist.

9. Verfahren nach einem der Ansprüche 1 bis 8, **dadurch gekennzeichnet, dass** in einem sicherheitskritischen System der Scheduler aus der *trusted network authority* (226) ausgegliedert wird und in ein anderes IP-Core verlagert wird, und wobei die *trusted network authority* die Überprüfung der vom Scheduler errechneten Sendeparameter vornimmt, ehe diese Sendeparameter mittels privilegierter Nachrichten von der *trusted network authority* an die anderen IP-Cores übertragen werden.

10. Verfahren nach einem der Ansprüche 1 bis 9, **dadurch gekennzeichnet, dass** die Dauer der Perioden der zeitgesteuerten Nachrichten im Kommunikationssystem Zweierpotenzen einer kleinsten Periode sind.

11. Verfahren nach Anspruch 10, **dadurch gekennzeichnet, dass** die Periode des Kommunikationssystem exakt der Dauer einer physikalischen Sekunde entspricht.

12. Verfahren nach einem der Ansprüche 1 bis 11, **dadurch gekennzeichnet, dass** über einen einzigen physikalischen Kommunikationskanal des Kommunikationssystem (200) im Zeitmultiplexverfahren mehrere unabhängige Ports eines IP-Cores versorgt werden.

13. Verfahren nach einem der Ansprüche 1 bis 12, **dadurch gekennzeichnet, dass** die Berechnung der konfliktfreien Sendeparameter innerhalb eines zeitgesteuerten SoC von einer *off-chip Instanz* durchgeführt wird und dass die Ergebnisse dieser Berechnung über eine Datenverbindung an den betroffenen zeitgesteuerten SoC übermittelt werden.

14. Verfahren nach Anspruch 13, **dadurch gekennzeichnet, dass** die Daten auf der Datenverbindung zwischen der *off-chip Instanz* und dem betroffenen SoC verschlüsselt übertragen werden.

15. Verfahren nach einem der Ansprüche 1 bis 14, **dadurch gekennzeichnet, dass** jede IP-Core eine Nachricht über das Kommunikationssystem (200) an die privilegierte IP-Core, die den Scheduler beinhaltet, senden kann um eine Änderung der zugewiesenen Sendezeitpunkte und der zugewiesenen Sendedauern anzufordern.

16. Verfahren nach einem der Ansprüche 1 bis 15, **dadurch gekennzeichnet, dass** eine oder mehrere IP-Coren periodisch eine Lebenszeichen-Nachricht über das Kommunikationssystem an eine oder mehrere der privilegierten IP-Coren senden.

17. Verfahren nach einem der Ansprüche 1 bis 16, **dadurch gekennzeichnet, dass** ein privilegierter IP-Core bei Ausbleiben der Lebenszeichen-Nachricht über das Kommunikationssystem den Wiederanlauf der betroffenen nicht privilegierten IP-Core durch den Netzwerkkontroller dieser IP-Core veranlassen kann.

18. Verfahren nach einem der Ansprüche 1 bis 17, **dadurch gekennzeichnet, dass** eine der privilegierten IP-Coren bei Ausbleiben der Lebenszeichen-Nachricht von einer IP-Core eine Rekonfiguration des SoC vornimmt, indem dem Netzwerkkontroller einer anderen IP-Core über eine privilegierte Nachricht des Kommunikationssystems die Rolle der ausgefallenen IP-Core zugewiesen wird und falls erforderlich, ein *i-state,* der für die Erfüllung der neuen Rolle erforderlich ist, an die IP-Core übertragen wird.

19. Verfahren nach einem der Ansprüche 1 bis 18, **dadurch gekennzeichnet, dass** bei Erkennen eines Fehlers durch den Netzwerkkontroller der Netzwerkkontroller autonom eine Diagnosenachricht versendet.

20. Verfahren nach einem der Ansprüche 1 bis 19, **dadurch gekennzeichnet, dass** das informationsverarbeitende Subsystem (IVS) einer IP-Core entweder ein programmierbarer Rechner einschließlich der Anwendersoftware, eine FPGA Einheit oder eine dedizierte Hardware-Einheit ist.

21. Verfahren nach einem der Ansprüche 1 bis 20, **dadurch gekennzeichnet, dass** der physikalische Kommunikationskanal des Kommunikationssystems die Sendedaten in einem fehlerkorrigierenden Code umkodiert, so dass die vom fehlerkorrigierenden Code beherrschten Übertragungsfehler vom Empfänger erkannt und korrigiert werden können.

22. Verfahren nach einem der Ansprüche 1 bis 21, **dadurch gekennzeichnet, dass** über einen einzigen physikalischen Kommunikationskanal des Kommunikationssystems im Zeitmultiplexverfahren mehrere unabhängige Ports einer IP-Core versorgt werden.

23. Verfahren nach einem der Ansprüche 1 bis 22, **dadurch gekennzeichnet, dass** das Kommunikationssystem über zwei oder mehrere unabhängige physikalische Übertragungskanäle verfügt, so dass bei Ausfall eines Übertragungskanals ein oder mehrere weitere unabhängige Übertragungskanäle zur Verfügung stehen.

24. Verfahren nach einem der Ansprüche 1 bis 23, **dadurch gekennzeichnet, dass** die Taktfrequenz des Kommunikationssystems und die Arbeitsfrequenz jedes einzelnen IP-Cores unterschiedlich sind.

25. Verfahren nach einem der Ansprüche 1 bis 24, **dadurch gekennzeichnet, dass** die Arbeitsfrequenz eines informationsverarbeitenden Subsystems eines IP-Cores vom Scheduler über eine privilegierte Nachricht des Kommunikationssystem an den Netzwerkkontroller dieser IP-Core dynamisch verändert werden kann.

26. Verfahren nach einem der Ansprüche 1 bis 25, **dadurch gekennzeichnet, dass** in einem designierten Bit im Header jeder Kommunikationssystem Nachricht vermerkt ist, ob die Nachricht eine periodische oder sporadische zeitgesteuerte Nachricht ist, und wo periodische Nachrichten in jeder zugewiesenen Periode gesendet werden und sporadische Nachrichten nur gesendet werden, wenn sich der Inhalt der Nachricht seit dem letzten Sendevorgang verändert hat.

27. Verfahren nach einem der Ansprüche 1 bis 26, **dadurch gekennzeichnet, dass** das informationsverarbeitende Subsystem (IVS) neben der Schnittstelle zum Netzwerkkontroller über eine weitere lokale Schnittstelle verfügt, über die eine Verbindung zu einem *off-chip Network* oder zu der *off-chip Prozessperipherie* realisiert ist.

28. Verfahren nach einem der Ansprüche 1 bis 27, **dadurch gekennzeichnet, dass** das informationsverarbeitende Subsystem (IVS) neben der Schnittstelle zum Netzwerkkontroller über eine weitere lokale Schnittstelle verfügt, die eine Verbindung zu einem anderen SoC entsprechend dem TT Ethernet Protokoll unterstützt.

29. Verfahren nach einem der Ansprüche 1 bis 28, **dadurch gekennzeichnet, dass** die globale Zeit des TT Ethernet Protokolls als Zeitreferenz für die externe Synchronisation des Kommunikationssystems herangezogen wird.

30. Verfahren nach einem der Ansprüche 1 bis 29, **dadurch gekennzeichnet, dass** ein SOC mehrere Ports mit dem TT Ethernet Protokoll unterstützt, um den Ausfall eines Ports oder eines externen Netzwerkes zu tolerieren.

31. Verfahren nach einem der Ansprüche 1 bis 30, **dadurch gekennzeichnet, dass** mittels kryptographischer Verfahren sichergestellt wird, dass die Sendezeitpunkte in den Netzwerkkontrollern nur von dazu berechtigten IP-cores über verschlüsselte Nachrichten gesetzt oder verändert werden können.

32. System-on-Chip (SoC) zum Durchführen eines Verfahrens nach einem der Ansprüche 1 bis 31.

33. System-on-Chip (SoC) nach Anspruch 32, auf dem eine Vielzahl von IP Cores über ein zeitgesteuertes Kommunikationssystem verbunden sind, **dadurch gekennzeichnet, dass** das zeitgesteuerte Kommunikationssystem (ZK) und die IP Cores unterschiedlichen Clockdomains angehören können und das Clockdomain-crossing jeweils innerhalb des einem IP Core zugeordneten Netzwerkkontrollers NK dadurch realisiert ist, dass ein informationsverarbeitendes Subsystem (IVS) des IP Cores innerhalb der a priori bekannten Stabilitätsintervalle zwischen der Nachrichtenübertragung durch das ZK auf die im NK vorhandenen Nachrichtenpuffer lesend oder schreibend zugreift.

34. System-on-Chip (SoC) nach Anspruch 32 oder 33, **dadurch gekennzeichnet, dass** über eine einzigen physikalische Kommunikationskanal des Kommunikationssystems im Zeitmultiplexverfahren mehrere unabhängige Ports eines IP-Cores versorgt werden.

35. System-on-Chip (SoC) nach einem der Ansprüche 32 bis 34, **dadurch gekennzeichnet, dass** die Berechnung der konfliktfreien Sendeparameter innerhalb eines zeitgesteuerten SoC von einer *off-chip Instanz* durchgeführt wird und dass die Ergebnisse dieser Berechnung über eine Datenverbindung an den betroffenen zeitgesteuerten SoC übermittelt werden.

36. System-on-Chip (SoC) nach Anspruch 35, **dadurch gekennzeichnet, dass** die Daten auf der Datenverbindung zwischen der *off-chip Instanz* und dem betroffenen SoC verschlüsselt übertragen werden.

37. System-on-Chip (SoC) nach einem der Ansprüche 32 bis 36, **dadurch gekennzeichnet, dass** jede IP-Coren eine Nachricht über das Kommunikationssystem an die privilegierte IP-Core, die den Scheduler beinhaltet, senden kann um eine Änderung der zugewiesenen Sendezeitpunkte und der zugewiesenen Sendedauern anzufordern.

## Claims

1. Method for transmitting messages via a *time-triggered communication system (ZK)* (200) between a number of *IP cores* (221-226), with each IP core (221-226) having an information-processing subsystem (IVS) (101) and a network controller (NK) (102), with each network controller (102) having at least two interfaces (110, 120), an interface (110) for the communication system and a second interface (120) for the information-processing subsystem, **characterised in that** a distinction is drawn between *privileged* and *non-privileged* messages of the communication system, and where the transmission parameters relating to the communication system (200) of a port of the network controller (102), such as the periodically recurring transmission time of a time-triggered message and the maximum transmission duration after each transmission time, can be set exclusively by a privileged message via the communication system (200) or directly by a privileged IP core (226), and wherein each network controller (102) intending to transmit a message starts to transmit the message autonomously exactly at the next time of the next transmission time and interrupts the transmission process at the latest after the assigned maximum transmission duration has elapsed.

2. Method according to claim 1, **characterised in that** the network controllers (102) are realised on a single system-on-chip (SoC) and the communication system (200) is carried out as a network-on-chip.

3. Method according to claim 1, **characterised in that** the network controllers are realised on different chips and that the communication system is also carried out as an off-chip network.

4. Method according to one of claims 1 to 3, **characterised in that** the distinction between a privileged an a non-privileged message of the communication system (200) takes place on the basis of a designated bit (331) in the header of each communication system message.

5. Method according to one of claims 1 to 4, **characterised in that** a distinction is made between *privileged* and *non-privileged* transmission ports of the network controller of an IP core, and a privileged message can only be sent via a privileged transmission port, where the distinction between a privileged and a non-privileged message takes place on the basis of the physical name of the privileged transmission port.

6. Method according to one of claims 1 to 5, **characterised in that** each IP core comprises a physical name which labels the physical identity of this IP core, and further comprises one or more logical names which label the functions of the IP core in the given use, and where the assignation of a logical name to an IP core can take place exclusively via a privileged message.

7. Method according to one of claims 1 to 6, **characterised in that** the information-processing subsystem (101) of a non-privileged IP core (221-225) can read the transmission parameters of its network controller (102), but not change them.

8. Method according to one of claims 1 to 7, **characterised in that** one of the privileged IP-cores (226), the so-called *trusted network authority* (TNA) contains a scheduler which dynamically calculates the transmission parameters of all IP cores (221-226) connected to the communication system (200) in such a manner that each transmission process can run free of conflict, and where the *trusted network authority* (226) assigns the periodic transmission times and the transmission durations of all ports of the network controllers (102) to the IP cores (221-226) via privileged messages via the communication system (200).

9. Method according to one of claims 1 to 8, **characterised in that** the scheduler is removed from the *trusted network authority* (226) in a security-critical system and is moved into another IP core and where the *trusted network authority* carries out the checking of the transmission parameters calculated by the scheduler before these transmission parameters are transferred by means of privileged messages from the *trusted network authority* to the other IP cores.

10. Method according to one of claims 1 to 9, **characterised in that** the duration of the periods of the time-triggered messages in the communication system are powers of two of a smallest period.

11. Method according to claim 10, **characterised in that** the period of the communication system corresponds exactly to the duration of a physical second.

12. Method according to one of claims 1 to 11, **characterised in that** several independent ports of an IP core are supplied via a single physical communication signal of the communication system (200) in the time division method.

13. Method according to one of claims 1 to 12, **characterised in that** the calculation of the conflict-free transmission parameter is carried out within a time-triggered SoC by an *off-chip entity* and that the results of this calculation are sent to the affected time-triggered SoC via a data connection.

14. Method according to claim 13, **characterised in that** the data on the data connection between the *off-chip entity* and the affected SoC are transferred in a coded manner.

15. Method according to one of claims 1 to 14, **characterised in that** each IP core can transmit a message via the communication system (200) to the privileged IP core containing the scheduler, so as to request a change of the assigned transmission times and the assigned transmission durations.

16. Method according to one of claims 1 to 15, **characterised in that** one or more IP cores transmit a vital sign message to one or more of the privileged IP cores via the communication system.

17. Method according to one of claims 1 to 16, **characterised in that** a privileged IP core can initiate the restart of the affected non-privileged IP core by the network controller of this IP core during the absence of the vital sign message via the communication system.

18. Method according to one of claims 1 to 17, **characterised in that** one of the privileged IP cores undertakes a reconfiguration of the SoC during an outage of the vital sign message from an IP core, by assigning the role of the failed IP core to the network controller of another IP core via a privileged message of the communication system, and, if necessary, by transferring an *i-state,* which is necessary for the fulfilment of the new role, to the IP core.

19. Method according to one of claims 1 to 18, **characterised in that** the network controller autonomously transmits a diagnostics message during the recognition of an error by the network controller.

20. Method according to one of claims 1 to 19, **characterised in that** the information-processing subsystem (IVS) of an IP core is either a programmable computer including the user software, a FPGA unit or a dedicated hardware unit.

21. Method according to one of claims 1 to 20, **characterised in that** the physical communication channel of the communication system recodes the transmission data in an error-correcting code, so that the transmission errors dominated by the error-correcting code are recognised and corrected by the receiver.

22. Method according to one of claims 1 to 21, **characterised in that** several independent ports of an IP core are supplied by means of one single physical communication channel of the communication system in the time division method.

23. Method according to one of claims 1 to 22, **characterised in that** the communication system comprises two or several independent physical transfer channels, so that one or several independent transfer channels are available during an outage of one transfer channel.

24. Method according to one of claims 1 to 23, **characterised in that** the clock frequency of the communication system and the operating frequency of each individual IP core are different.

25. Method according to one of claims 1 to 24, **characterised in that** the operating frequency of an information-processing subsystem of an IP core can be changed dynamically by the scheduler via a privileged message of the communication system to the network controller of this IP core.

26. Method according to one of claims 1 to 25, **characterised in that,** in a designated bit in the header of each communication system message it is noted if the message is a periodic or sporadic time-triggered message, and where periodic messages are transmitted in each assigned period, and sporadic messages are only sent if the content of the message has changed since the last transmission process.

27. Method according to one of claims 1 to 26, **characterised in that** the information-processing subsystem (IVS) comprises a further local interface in addition to the interface to the network controller, via which a connection to an *off-chip* network is realised.

28. Method according to one of claims 1 to 27, **characterised in that** the information-processing subsystem (IVS) comprises a further local interface in addition to the interface to the network controller, which supports a connection to another SoC corresponding to the TT ethernet protocol.

29. Method according to one of claims 1 to 28, **characterised in that** the global time of the TT ethernet protocol is consulted as a time reference for the external synchronisation of the communication system.

30. Method according to one of claims 1 to 29, **characterised in that** one SOC supports several ports with the TT ethernet protocol, so as to tolerate the outage of a port or an external network.

31. Method according to one of claims 1 to 30, **characterised in that** it is ensured by means of cryptographic methods that the transmission times in the network controllers can only be set or changed via coded messages by the IP cores authorised therefor.

32. System-on-chip (SoC) for carrying out a method according to one of claims 1 to 31.

33. System-on-chip (SoC) according to claim 32, on which are connected a plurality of IP cores via a time-triggered communication system, **characterised in that** the time-triggered communication system (ZK) and the IP cores can belong to different clock domains and that clock domain crossing respectively within one network controller NK assigned to an IP core is carried out **in that** an information-processing subsystem (IVS) of the IP core accesses between the message transfer by the ZK to the message buffers present in the NK in a reading or writing manner within the a priori known stability intervals.

34. System-on-chip (SoC) according to claim 32 or 33, **characterised in that** several independent ports of an IP core are supplied via a single physical communication channel of the communication system in the time division method.

35. System-on-chip (SoC) according to one of claims 32 to 34, **characterised in that** the calculation of the conflict-free transmission parameters is carried out by an *off-chip entity* within a time-triggered SoC and that the results of this calculation are transmitted to the affected time-triggered SoC via a data connection.

36. System-on-chip (SoC) according to claim 35, **characterised in that** the data on the data connection between the *off-chip entity* and the affected SoC are transmitted in a coded manner.

37. System-on-chip (SoC) according to one of claims 32 to 36, **characterised in that** each IP core can transmit a message via the communication system to the privileged IP core which contains the scheduler, so as to request a change of the assigned transmission times and the assigned transmission durations.

## Revendications

1. Procédé de transfert de messages par l'intermédiaire *d'un système de communication commandé en temps (ZK)* (200) entre un nombre de *noyaux IP* (221-226), chaque noyau IP (221-226) ayant un sous-système de traitement d'informations (IVS) (101) et un contrôleur de réseau (NK) (102), chaque contrôleur de réseau (102) ayant au moins deux interfaces (110, 120), une interface (110) pour le système de communication et une seconde interface (120) pour le sous-système de traitement d'informations, **caractérisé par le fait qu'il** est fait la différence entre des messages du système de communication *privilégiés* et *non privilégiés,* et où les paramètres de transmission concernant le système de communication (200) d'un port d'un contrôleur de réseau (102), comme l'instant de transmission récurrent de façon périodique d'un message commandé en temps et la durée de transmission maximale après chaque instant de transmission, sont réglés de façon exclusive par un message privilégié par l'intermédiaire du système de communication (200) ou directement par un noyau IP privilégié (226), et où chaque contrôleur de réseau (102), qui prévoit d'envoyer un message, commence à envoyer le message de façon autonome exactement à l'instant de transmission réglé suivant dans le temps, et interrompt le processus de transmission au plus tard après que la durée de transmission maximale affectée est écoulée.

2. Procédé selon la revendication 1, **caractérisé par le fait que** les contrôleurs de réseau (102) sont réalisés sur un système sur puce (SoC) unique et le système de communication (200) est formé en tant que réseau sur puce.

3. Procédé selon la revendication 1, **caractérisé par le fait que** les contrôleurs de réseau sont réalisés sur différentes puces et le système de communication est formé en tant que réseau hors puce.

4. Procédé selon l'une des revendications 1 à 3, **caractérisé par le fait qu'il** est fait la différence entre un message privilégié et un message non privilégié du système de communication (200) se produit sur la base d'un bit désigné (331) dans l'en-tête de chaque message de système de communication.

5. Procédé selon l'une des revendications 1 à 4, **caractérisé par le fait qu'il** est fait la différence entre des ports de transmission *privilégiés* et *non privilégiés* du contrôleur de réseau d'un noyau IP, et un message privilégié peut être transmis uniquement par l'intermédiaire d'un port de transmission privilégié, la distinction entre un message privilégié et un message non privilégié se produisant sur la base du nom physique du port de transmission privilégié.

6. Procédé selon l'une des revendications 1 à 5, **caractérisé par le fait que** chaque noyau IP comprend un nom physique, qui désigne l'identité physique de ce noyau IP, et en outre comprend un ou plusieurs noms logiques, qui désignent les fonctions du noyau IP dans l'utilisation donnée, et l'affectation d'un nom logique à un noyau IP pouvant se produire exclusivement par l'intermédiaire d'un message privilégié.

7. Procédé selon l'une des revendications 1 à 6, **caractérisé par le fait que** le sous-système de traitement d'informations (101) d'un noyau IP non privilégié (221-225) peut lire mais non modifier les paramètres de transmission de son contrôleur de réseau (102).

8. Procédé selon l'une des revendications 1 à 7, **caractérisé par le fait que** l'un des noyaux IP privilégiés (226), désigné *autorité de réseau de confiance* (TNA), contient un programmateur, qui calcule de façon dynamique les paramètres de transmission de tous les noyaux IP (221-226) connectés au système de communication (200), de telle sorte que chaque processus de transmission peut s'exécuter sans conflit, et *l'autorité de réseau de confiance* (226) affectant les instants de transmission périodiques et les durées de transmission de tous les ports des contrôleurs de réseau (102) aux noyaux IP (221-226) au moyen de messages privilégiés par l'intermédiaire du système de communication (200).

9. Procédé selon l'une des revendications 1 à 8, **caractérisé par le fait que,** dans un système critique en termes de sécurité, le programmateur est retiré de *l'autorité de réseau de con fiance* (226) et est déplacé dans un autre noyau IP, et *l'autorité de réseau de confiance* réalisant la vérification des paramètres de transmission calculés par le programmateur, avant que ces paramètres de transmission ne soient transférés au moyen de messages privilégiés de l'autorité de *réseau de confiance* aux autres noyaux IP.

10. Procédé selon l'une des revendications 1 à 9, **caractérisé par le fait que** la durée des périodes des messages commandés en temps dans le système de communication est le carré d'une période la plus petite.

11. Procédé selon la revendication 10, **caractérisé par le fait que** la période du système de communication correspond exactement à la durée d'une seconde physique.

12. Procédé selon l'une des revendications 1 à 11, **caractérisé par le fait que** plusieurs ports indépendants d'un noyau IP sont fournis par l'intermédiaire d'un canal de communication physique unique du système de communication (200) dans le procédé de multiplexage par répartition dans le temps.

13. Procédé selon l'une des revendications 1 à 12, **caractérisé par le fait que** le calcul des paramètres de transmission sans conflit est réalisé dans un SoC commandé en temps par une *entité hors puce* et que les résultats de ce calcul sont transmis au SoC commandé en temps affecté par l'intermédiaire d'une connexion de données.

14. Procédé selon la revendication 13, **caractérisé par le fait que** les données sur la connexion de données entre *l'entité hors puce* et le SoC affecté sont transférées d'une manière codée.

15. Procédé selon l'une des revendications 1 à 14, **caractérisé par le fait que** chaque noyau IP peut transmettre un message par l'intermédiaire du système de communication (200) au noyau IP privilégié qui contient le programmateur, pour requérir une modification des instants de transmission affectés et des durées de transmission affectées.

16. Procédé selon l'une des revendications 1 à 15, **caractérisé par le fait qu'**un ou plusieurs noyaux IP transmettent périodiquement un message de signe de vie par l'intermédiaire du système de communication à l'un ou à plusieurs des noyaux IP privilégiés.

17. Procédé selon l'une des revendications 1 à 16, **caractérisé par le fait qu'un** noyau IP privilégié peut initier le redémarrage du noyau IP non privilégié affecté par le contrôleur de réseau de ce noyau IP lors de l'absence du message de signe de vie par l'intermédiaire du système de communication.

18. Procédé selon l'une des revendications 1 à 17, **caractérisé par le fait que** l'un des noyaux IP privilégiés entreprend une reconfiguration du SoC lors de l'absence du message de signe de vie provenant d'un noyau IP, par affectation du rôle du noyau IP défectueux au contrôleur de réseau d'un autre noyau IP par l'intermédiaire d'un message privilégié du système de communication et si nécessaire, par transfert d'un *i-état,* qui est nécessaire pour la réalisation du nouveau rôle, au noyau IP.

19. Procédé selon l'une des revendications 1 à 18, **caractérisé par le fait que** le contrôleur de réseau envoie de façon autonome un message de diagnostic lors de la reconnaissance d'une erreur par le contrôleur de réseau.

20. Procédé selon l'une des revendications 1 à 19, **caractérisé par le fait que** le sous-système de traitement d'informations (IVS) d'un noyau IP est soit un ordinateur programmable y compris le logiciel utilisateur, soit une unité de matrice prédiffusée programmable (FPGA) ou une unité matérielle dédiée.

21. Procédé selon l'une des revendications 1 à 20, **caractérisé par le fait que** le canal de communication physique du système de communication recode les données de transmission en un code de correction d'erreurs, de telle sorte que les erreurs de transmission dominées par le code de correction d'erreurs peuvent être reconnues et corrigées par le récepteur.

22. Procédé selon l'une des revendications 1 à 21, **caractérisé par le fait que** plusieurs ports indépendants d'un noyau IP sont fournis par l'intermédiaire d'un canal de communication physique unique du système de communication dans le procédé de multiplexage par répartition dans le temps.

23. Procédé selon l'une des revendications 1 à 22, **caractérisé par le fait que** le système de communication comprend au moins deux canaux de transfert physiques indépendants, de telle sorte qu'un ou plusieurs autres canaux de transfert indépendants sont disponibles lors de l'interruption d'un canal de transfert.

24. Procédé selon l'une des revendications 1 à 23, **caractérisé par le fait que** la fréquence d'horloge du système de communication et la fréquence de fonctionnement de chaque noyau IP individuel sont différentes.

25. Procédé selon l'une des revendications 1 à 24, **caractérisé par le fait que** la fréquence de fonctionnement d'un sous-système de traitement d'informations d'un noyau IP peut être modifiée de façon dynamique par le programmateur par l'intermédiaire d'un message privilégié du système de communication au contrôleur de réseau de ce noyau IP.

26. Procédé selon l'une des revendications 1 à 25, **caractérisé par le fait qu'il** est noté dans un bit désigné dans l'en-tête de chaque message du système de communication si le message est un message commandé en temps périodique ou sporadique, et où des messages périodiques sont transmis dans chaque période affectée, et des messages sporadiques sont envoyés uniquement si le contenu du message a changé depuis le dernier processus de transmission.

27. Procédé selon l'une des revendications 1 à 26, **caractérisé par le fait que** le sous-système de traitement d'informations (IVS) comprend en plus de l'interface avec le contrôleur de réseau une autre interface locale par l'intermédiaire de laquelle une connexion à un *réseau hors puce* ou à la *périphérie hors puce* est réalisée.

28. Procédé selon l'une des revendications 1 à 27, **caractérisé par le fait que** le sous-système de traitement d'informations (IVS) comprend en plus de l'interface avec le contrôleur de réseau une autre interface locale qui supporte une connexion à un autre SoC correspondant au protocole TTEthernet.

29. Procédé selon l'une des revendications 1 à 28, **caractérisé par le fait que** le temps global du protocole TTEthernet est consulté en tant que référence temporelle pour la synchronisation externe du système de communication.

30. Procédé selon l'une des revendications 1 à 29, **caractérisé par le fait qu'un** SoC supporte plusieurs ports avec le protocole TTEthernet, de façon à tolérer l'interruption d'un port ou d'un réseau externe.

31. Procédé selon l'une des revendications 1 à 30, **caractérisé par le fait qu'il** est garanti au moyen de procédés cryptographiques que les instants de transmission dans les contrôleurs de réseau peuvent uniquement être réglés ou modifiés par l'intermédiaire de messages codés par les noyaux IP autorisés à cet effet.

32. Système sur puce (SoC) pour la réalisation d'un procédé selon l'une des revendications 1 à 31.

33. Système sur puce (SoC) selon la revendication 32, sur lequel sont connectés une pluralité de noyaux IP par l'intermédiaire d'un système de communication commandé en temps, **caractérisé par le fait que** le système de communication commandé en temps (ZK) et les noyaux IP peuvent appartenir à différents domaines d'horloge et que le croisement de domaines d'horloge respectivement dans le contrôleur de réseau NK affecté à un noyau IP est réalisé en ce qu'un sous-système de traitement d'informations (IVS) du noyau IP accède entre le transfert de message par le ZK aux tampons de message présents dans le NK en lecture ou en écriture dans les intervalles de stabilité a priori connus.

34. Système sur puce (SoC) selon l'une des revendications 32 ou 33, **caractérisé par le fait que** plusieurs ports indépendants d'un noyau IP sont fournis par l'intermédiaire d'un canal de communication physique unique du système de communication dans le procédé de multiplexage par répartition dans le temps.

35. Système sur puce (SoC) selon l'une des revendications 32 à 34, **caractérisé par le fait que** le calcul des paramètres de transmission sans conflit est réalisé par une entité *hors puce* dans un SoC commandé en temps et que les résultats de ce calcul sont transmis au SoC commandé en temps affecté par l'intermédiaire d'une connexion de données.

36. Système sur puce (SoC) selon la revendication 35, **caractérisé par le fait que** les données sur la connexion de données entre l'entité *hors puce* et le SoC affecté sont transmises d'une manière codée.

37. Système sur puce (SoC) selon l'une des revendications 32 à 36, **caractérisé par le fait que** chaque noyau IP peut transmettre un message par l'intermédiaire du système de communication au noyau IP privilégié, qui contient le programmateur, pour requérir une modification des instants de transmission affectés et des durées de transmission affectées.
